(19) Europäisches Patentamt
European Patent Office
Office européen des brevets

(11) Publication number: **0 042 307 B1**

# (12) EUROPEAN PATENT SPECIFICATION

(45) Date of publication of patent specification: **10.09.86**

(51) Int. Cl.[4]: **B 41 M 5/24,** G 11 B 7/24

(21) Application number: **81302729.9**

(22) Date of filing: **17.06.81**

## (54) An optical recording element and a method of recording information using the element.

(30) Priority: **18.06.80 US 160809**

(43) Date of publication of application:
**23.12.81 Bulletin 81/51**

(45) Publication of the grant of the patent:
**10.09.86 Bulletin 86/37**

(84) Designated Contracting States:
**BE DE FR GB IT NL**

(56) References cited:
**EP-A-0 024 136**
**DE-A-2 757 744**
**FR-A-2 435 780**

**IBM TECHNICAL DISCLOSURE BULLETIN, vol.14, no.12, May 1972, New York (US) E.P. DAMM et al.: "Protective coating for optically thin recording films", page 3793**

(73) Proprietor: **EASTMAN KODAK COMPANY**
**343 State Street**
**Rochester New York 14650 (US)**

(72) Inventor: **Hollister, Kenneth Robert**
**Kodak Park**
**Rochester New York (US)**
Inventor: **Thomas, Harold Todd**
**Kodak Park**
**Rochester New York (US)**

(74) Representative: **Baron, Paul Alexander Clifford et al**
**Kodak Limited Patent Department Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 042 307 B1

**Description**

The present invention relates to optical recording elements having thermal- and mechanical-barrier layers. The thermal- and mechanical-barrier layers used in the present invention are capable of being coated from aqueous coating compositions, are compatible with the recording layer of an optical recording element and have excellent thermal- and mechanical-barrier properties.

Elements for recording information by thermally deforming the recording layer are known. These elements are useful in providing for rapidly recording large amounts of digital information in a small area. These elements provide for a method of optically recording video information which is read back with a high signal-to-noise ratio (SNR). A large variety of recording layers are useful in these elements. The recording layers of particularly advantageous elements most often comprise a dye and an organic solvent-soluble binder. Recording elements of this type are described in European Patent Application, Publication No. 3262 of August 8, 1979.

Recording on an optical recording element is accomplished by means of a pulsed or modulated beam of high energy-density radiation, usually a laser beam. The laser beam is focused onto the surface of the recording layer of the element. The recording layer absorbs energy from the laser beam so that a small portion of the layer burns, evaporates or is otherwise displaced from these portions. This technique of optical recording on a heat-deformable recording layer is usually referred to in the art as "ablative recording". Normally, there is continuous relative motion between the laser beam and the layer so that, as the laser is pulsed or modulated, discrete deformations of varying sizes are created in the layer. The sizes and spacing of these defomations constitute the encoded information. One element of this type is commonly referred to in the art as an "optical video disc".

It is known in the art, e.g. U.S. Patent 4,101,907, to provide a thermal- and mechanical-barrier layer over the recording layer of an ablative-type optical recording element. The purpose of this barrier layer is to protect the recording layer from defects such as scratches, dirt and fingerprints. Another function of the thermal- and mechanical-barrier layer is to prevent the material which is vaporized from the recording layer from depositing on the optical system and other components of the recording apparatus. Still another function of the thermal- and mechanical-barrier layer is to retain the heat which is generated in the recording layer by the writing beam.

In U.S. Patent 4,069,487 there is described an ablative-type optical recording element having a protecting layer which is not destroyed by the recording laser beam. Useful protecting layers are either organic or inorganic. Organic polymers disclosed as being useful include those of the "solvent evaporation solidifying type" and those of the "catalyst curing type". Representative polymers of the "solvent evaporation solidifying type" include nitrocellulose resins, acetyl cellulose resins, poly(vinyl chloride) resins, polycarbonate resins, saturated polyester resins, polystyrene resins and acrylic resins. All of these resins are hydrophobic and are soluble only in organic solvents. The problem is that when such polymers are coated from organic solvents over recording layers comprising a dye and an organic solvent-soluble binder, the recording layer is adversely affected by the organic solvent.

DE—A—2 757 744 discloses optical recording elements having a protective surface coating over a recording layer comprising a metal and a halide. The protective surface coating must be mechanically durable and inert to the underlying layer. Polymers suggested for use in such protective coating layers include styrene, polystyrene, styrene-maleic anhydride copolymers, polymers of vinyl, polymers of vinyl acetate derivatives such as poly(vinyl acetate), poly(vinyl butyral), poly(vinyl formal), polymethacrylate and acrylamide polymers. The polymers are said to be soluble in various organic solvents. Water is not mentioned. The problem is tha such polymers are generally only soluble in organic solvents. When they are coated from organic solvents over recording layers comprising a dye and an organic solvent-soluble binder, the recording layer is adversely affected by the organic solvent. There is no teaching in DE—A—2 757,744 as to how to select polymers which can be coated without adversely affecting recording layers comprising a dye and an organic solvent-soluble binder.

It is an objective of the present invention to provide optical recording elements having recording layers of a dye and an organic solvent-soluble binder overcoated with a thermal- and mechanical-barrier layer wherein the thermal- and mechanical barrier layer can be coated over the recording layer without adversely affecting the recording layer.

The foregoing objective has been achieved by the present invention which provides an optical recording element comprising a support having thereon a heat-deformable recording layer and at least one substantially transparent thermal- and mechanical-barrier layer coated over said recording layer characterized in that said recording layer comprises a dye and an organic solvent-soluble binder and said barrier layer comprises a polymer, excluding poly(acrylamide), having a glass transition temperature ($T_g$) of at least 100°C when dry, said polymer being water-soluble prior to coating.

Preferably, the barrier layer is at least 0.15 micrometer thick. It is particularly useful to provide the described barrier layer between the recording layer and the support, when the support has a layer which is a good heat conductor, i.e., a reflective layer.

A glass transition temperature greater then 100°C insures that the thermal- and mechanical-barrier layer does not soften and flow into the pits, craters, depressions or cavities formed in the recording layer when the recording layer is subjected to a pulsed or modulated beam of high energy-density radiation.

Water-solubility insures that the polymers can be coated over the recording layer without adverse effect on the recording layer containing the organic solvent-soluble binder. Transparency is required to insure that there is no interference or absorption of the high energy-density radiation used to make the recording. Thus, useful polymers must not include chromophores which absorb in the 400—900 nm range of the spectrum. It will be obvious to those skilled in the art that any polymer possessing the above-described characteristics will be useful.

The thermal- and mechanical-barrier layers described herein are comprised of water-soluble polymeric materials and are capable of being easily and economically coated on the recording layer. Such materials produce a tough and flexible barrier. Further, elements of the invention exhibit only a slight degradation in performance compared with an element not having the protective barrier layer. For example, the incease in the useful recording power is generally only a factor of about 1.5 and the decease in playback SNR is generally only about 3 to 5 db. Thus, barrier layers of high Tg, water-soluble materials exhibit performance characteristics similar to a refractory barrier layer without the coating expense and brittleness of the refractory material. This lack of brittleness in the polymer thermal- and mechanical-barrier layer used herein is unexpected in view of prior art teachings that below the glass transition temperature many polymers tend to be brittle. See "Properties of Polymers" by D. W. van Krevelen and P. J. Hoftyzer, Elsevier Scientific Publishing Company, Amsterdam, 1976, page 23, lines 36—37.

The invention also provides a method of recording information encoded with a high energy-density radiation beam which method comprises focussing the beam on the recording layer of an optical recording element according to the invention and scanning the beam in relative motion to the recording layer to produce deformations in the layer which correspond to the encoded information.

In many cases, it is desirable that the outermost surface of the recording element be sufficiently spaced from the recording layer so that defects on the surface such as scratches, dust and fingerprints do not interfere with the recording and reading processes. Thus, in accordance with the present invention there is provided a recording element as described above, also having a spacer layer of a transparent composition coated on the barrier layer so that the combined thickness of the barrier layer and the spacer layer is greater than about 0.1 mm. It is preferred that this spacer layer be substantially water-impermeable so that water is prevented from reaching the water-soluble thermal- and mechanical-barrier layer, thereby decreasing its glass transition temperature.

The present invention provides an improved optical recording element having a thermal- and mechanical-barrier layer. By "thermal-barrier" is meant that the layer is capable of resisting the flow of heat generated in the recording layer during the recording process. By "mechanical-barrier" is meant that the layer is capable of remaining intact, i.e., unruptured, during the recording process. Barrier layers of a water-soluble polymer having a $T_g$ when dry of at least 100°C meet the requirements.

The polymers which are useful as the barrier layers in the elements of the present invention must be water-soluble. By "water-soluble" is meant that it is possible to dissolve enough of the polymer in water so as to form a coating solution which is at least about one weight percent of the polymer. For the purposes of the present invention, a polymer is considered useful if it is water-soluble prior to coating. Thus, water-soluble polymers which are capable of being rendered insoluble after coating, such as by crosslinking, are useful in the described barrier layers.

The barrier layers must comprise a polymer having a $T_g$, when dry, greater than 100°C. The $T_g$ is measured by means which are well-known in the art. The $T_g$ of some water-soluble polymers is somewhat dependent upon the water content of the polymer. It has been found that useful barrier polymers have a $T_g$ in excess of 100°C when dry, that is, when the $T_g$ is measured on a substantially dehydrated or desiccated sample.

Particularly preferred barrier layers comprise polymers having a $T_g$ greater than about 150°C. This higher $T_g$ provides for still further improvement in the threshold power requirements and playback SNR.

The described thermal- and mechanical-barrier layers must be substantially transparent. By "transparent" is meant that the layer has little or no absorption at the wavelength of the reading or writing beam. It further means that the layer is clear, i.e., substantially free from haze-causing defects such as crystals and reticulated surfaces.

The thermal- and mechanical-barrier layers of the optical recording elements of the present invention need only be thick enough to avoid rupturing during the recording process. Thicknesses on the order of 0.15 micrometer are usually sufficient to provide this barrier. Greater thicknesses of the water-soluble barrier layer are also useful.

Useful water-soluble polymers for the thermal- and mechanical-barrier layer include addition and condensation polymers. Both homo- and copolymers are useful. The polymers are derived from monomers which impart the properties of water solubility or high glass transition temperature or both to the polymer. Polymers derived from mixtures of various water-solubility-imparting or high-$T_g$-imparting monomers are also useful. So long as the polymers contain sufficient units derived from water-solubility-imparting monomers and sufficient units derived from high-glass-transition-temperature-imparting monomers to provide the described solubility and glass-transition-temperature characteristics, the remainder of the polymer may be units derived from other monomers. The units derived from other monomers may be included to provide other properties such as coatability, flexibility, tensile strength and clarity.

The following addition polymerizable monomers may be included in the polymer to impart water solubility, high $T_g$ or both. Either the acid or salt form of certain of the monomers is useful, the salt form generally being preferred because the salt form generally increases the water solubility and $T_g$ of the dried layers in comparison with the acid form.

2-ethoxycarbonylallylsulfuric acid, sodium salt;
4-acryloyloxybutane-1-sulfonic acid, sodium salt;
4-acryloyloxy-butane-2-sulfonic acid, sodium salt;
acrylic acid;
citraconic acid;
chlorofumaric acid;
chloromaleic acid;
α-chloroacrylic acid;
3-acryloyloxypropionic acid;
mono-(2-acryloyloxyethyl) phosphate;
potassium 3-acryloyloxypropyl phosphate;
potassium 2-acryloyloxyethyl phosphate;
4-*t*-butyl-9-methyl-8-oxo-7-oxa-4-aza-9-decene-1-sulfonic acid;
methacrylic acid;
mono(2-methacryloyloxyethyl) phosphate;
potassium 3-methacryloyloxypropyl phosphate;
mono(3-methacryloyloxypropyl) phosphate;
ethylenesulfuric acid, sodium salt;
fumaric acid;
3-acrylamido-3-methylbutanoic acid;
bis(3-sodiosulfopropyl) itaconate;
itaconic acid;
maleic acid;
mesaconic acid;
2-acryloyloxyethylsulfuric acid, sodium salt;
2-methacryloyloxyethylsulfuric acid, sodium salt;
pyridinium 2-methacryloyloxyethylsulfate;
3-acrylamidopropane-1-sulfonic acid, potassium salt;
ammonium, (8-methacryloyloxy-3,6-dioxaoctyl)sulfate;
*p*-styrenesulfonic acid, sodium salt;
vinylphenylmethanesulfonic acid, sodium salt;
3-methacryloyloxypropane-1-sulfonic acid, sodium salt;
4-methacryloyloxybutane-2-sulfonic acid, sodium salt;
4-methacryloyloxybutane-1-sulfonic acid, sodium salt;
2-methacryloyloxyethyl-1-sulfonic acid, sodium salt;
2-acrylamido-2-methylpropanesulfonic acid;
3-methacryloyloxypropane-1-sulfonic acid, zinc salt;
3-acryloyloxypropane-1-sulfonic acid, sodium salt;
methacrylic acid, sodium salt;
lithium methacrylate;
N-[3-(N-phenylsulfonyl-N-sodiosulfamoyl)phenyl]acrylamide;
N-[2-(N-phenylsulfonylsulfamoyl)ethyl]acrylamide;
N-[3-(N-methylsufonyl-N-sodiosulfamoyl)phenyl]methacrylamide;
N-(*m* and *p*-vinylbenzyl)iminodiacetic acid;
2-methacryloyloxyethyl-1-sulfonic acid;
ammonium *p*-styrenesulfonate;
sodium *o*- and *p*-styrenesulfonate;
potassium *o*- and *p*-styrenesulfonate;
2-acrylamido-2-methylpropanesulfonic acid, sodium salt;
N-(3-acrylamidopropyl)ammonium methacrylate;
N-(2-methacryloyloxyethyl)-N,N,N-trimethylammonium *p*-toluenesulfonate;
1,2-dimethyl-5-vinylpyridinium methosulfate;
N-(2-methacryloyloxyethyl)-N,N,N-trimethylammonium bromide;
N-(2-methacryloyloxyethyl)-N,N,N-trimethylammonium chloride;
N-(2-hydroxy-3-methacryloyloxypropyl)-N,N,N-trimethylammonium sulfate;
N-(2-methacryloyloxyethyl)-N,N,N-trimethylammonium nitrate;
N-(2-methacryloyloxyethyl)-N,N,N-trimethylammonium phosphate;
N-(2-methacryloyloxyethyl)-N,N,N-trimethylammonium methosulfate;
N-(2-hydroxy-3-methacryloyloxypropyl-N,N,N-trimethylammonium chloride;
N-vinylbenzyl-N,N,N-trimethylammonium chloride;
N-(3-acrylamido-3-methylbutyl)-N,N,N-trimethylammonium methosulfate;

3-methyl-1-vinylimidazolium methosulfate;
N-(3-methacrylamidopropyl)-N-benzyl-N,N-dimethylammonium chloride;
N-(3-methacrylamidopropyl)-N,N,N-trimethylammonium chloride;
N-(2-acryloyloxyethyl)-N,N,N-trimethylammonium methosulfate;
N-benzyl-N-(2-methacryloyloxyethyl)-N,N-dimethylammonium chloride;
4,4,9-trimethyl-8-oxo-7-oxa-4-azonia-9-decene-1-sulfonate;
3-(2-methyl-5-vinylpyridinio)propylsulfonate;
acrylamide;
N-methacryloyl-N'-glycylhyrazine hydrochloride;
N-methyl-2-aminoethyl methacrylate hydrochloride;
N-methylolacrylamide;
N-(*m*- and *p*- vinylbenzyl)-N,N-dimethylamine;
2-phenyl-1-vinylimidazole;
N-isopropylacrylamide;
2-methyl-1-vinylimidazole;
1-vinylimidazole;
N-methylmethacrylamide;
methacrylamide;
maleimide;
N-(2-aminoethyl)methacrylamide hydrochloride;
N-(3-aminopropyl)methacrylamide hydrochloride;
N-(2-amino-2-methylpropyl)methacrylamide, methacrylic acid salt;
acrylonitrile;
N,N-dimethylmethacrylamide;
N-methylacrylamide;
2-ureidoethyl vinyl ether;
N-methacryloyl-N'-ureidoacetylhydrazine;
N-vinyl-N'-(2-hydroxyethyl)succinamide;
2-methyl-5-vinylpyridine;
2-vinylpyridine;
4-vinylpyridine;
N-isopropylmethacrylamide;
N,N-dimethylacrylamide.

Crosslinking reduces the water solubility of polymers useful for coating; however, crosslinking of the polymers after coating with a crosslinking agent often beneficially increases the $T_g$ of the coated layers. Certain of the heterocyclic nitrogen-containing polymers are capable of being crosslinked after coating by treatment with metal ions. For example, poly(2-methyl-1-vinyl-imidazole) may be crosslinked after coating by zinc ion. The polymers optionally have incorporated therein monomers having crosslinkable or "hardenable" groups. Preferably less than 30 percent of such monomers are incorporated in the addition polymers useful in the invention. Examples of such crosslinkable monomers include:

acryloylacetone;
2-acetoacetoxypropyl methacrylate;
N-(2-acetoacetoxyethyl)acrylamide;
*m*-methacrylamidophenol;
*m*-acrylamidophenol;
N-(methacryloyloxyethyl)acetoacetamide;
2-acetoacetoxyethyl methacrylate;
N-(3-acetoacetamidopropyl)methacrylamide;
N-cyanoacetyl-N'-methacryloylhydrazine;
glycidyl methacrylate;
glycidyl acrylate.

Examples of transparent, water-soluble polymers having a glass transition temperature greater than 100°C that are useful as thermal- and mechanical-barrier layers are listed below:

poly(acrylic acid) Tg 106°C;
poly(sodium acrylate) Tg 230°C;
poly(methacrylic acid) Tg 228°C;
poly(sodium methacrylate) Tg 310°C;
poly(2-acrylamido-2-methylpropanesulfonic acid, sodium salt) Tg greater than 250°C;
poly(styrenesulfonic acid, sodium salt) Tg greater than 250°C;
poly(2-sulfoethyl methacrylate, sodium salt);
poly(3-acryloyloxypropane-1-sulfonic acid, sodium salt);
poly(2-methyl-1-vinylimidazole) Tg 232°C;
poly(1-vinylimidazole) Tg 182°C;
poly[3-(2-methyl-5-vinylpyridinio)propylsulfonate];
poly(3-methyl-1-vinylamidazolium methosulfate);

poly(1-vinylimidazole-co-acrylic acid) (1:2) wt;
poly[N-(2-methacryloyloxyethyl)-N,N,N-trimethylammonium chloride];
poly[1-vinylimidazole-co-3-(2-hydroxyethyl)-1-vinylimidazolium chloride] (75/25) wt;
poly(2-methyl-1-vinylimidazole-co-3-benzyl-2-methyl-1-vinylimidazolium chloride) (50/50) wt;
poly(acrylamide-co-2-methyl-1-vinylimidazole) (50/50) wt;
poly(potassium 2-acryloxyloxyethyl phosphate);
poly(ethylenesulfuric acid, sodium salt);
poly(vinylphenylmethanesulfonic acid, sodium salt);
poly(4-methacryloyloxybutane-1-sulfonic acid, sodium salt);
poly(2-methacryloyloxyethylsulfuric acid, sodium salt);
poly{N-[3-(N-phenylsulfonyl-N-sodiosulfamoyl)phenyl]acrylamide};
poly{N-[3-(N-methylsulfonyl-N-sodiosulfamoyl)phenyl]methacrylamide};
poly(ammonium *p*-styrenesulfonate);
poly[N-(2-methacryloyloxyethyl)-N,N,N-trimethylammonim *p*-toluenesulfonate];
poly(1,2-dimethyl-5-vinylpyridinium methosulfate);
poly(N-vinylbenzyl-N,N,N-trimethylammonium chloride);
poly(3-methyl-1-vinylimidazolium methosulfate);
poly[N-(2-acryloyloxyethyl-N,N,N-trimethylammonium methosulfate];
poly[N-(2-methacryloyloxyethyl)-N,N-dimethyl-N-benzylammonium chloride];
poly(N-methylolacryloylamide-co-2-methyl-1-vinylimidazole) (25/75) wt;
poly(sodium 2-acrylamido-2-methylpropane-1-sulfonate-co-N-isopropylacrylamide) (1/1) wt;
poly(methacrylamide-co-sodium methacrylate) (1/1) wt;
poly[N-(2-amino-2-methylpropyl)methacrylamide, methacrylic acid salt];
poly[N-(2-acryloyloxyethyl)-N,N,N-trimethylammonium chloride-co-2-methyl-5-vinylpyridine] (2/1) wt;
poly(acrylonitrile-co-sodium acrylate) (30/70) wt;
poly[2-acetoacetoxyethyl methacrylate-co-N-isopropylacrylamide-co-sodium 2-acrylamido-2-methylpropanesulfonate] (10/45/45) wt;
poly(*m*-acrylamidophenol-co-2-methyl-1-vinylimidazole) (15/85) wt;
poly[acrylamide-co-N-(3-acetoacetamidopropylmethacrylamide-co-sodium 2-acrylamido-2-methylpropane-1-sulfonate] (70/25/5) wt;
poly(glycidylacrylate-co-sodium-3-acryloyloxypropyl-1-sulfonate) (7.5/92.5) wt;

Condensation polymers, such as polyesters, polycarbonates, polyurethanes, polyamides and mixed polyesteramides, often have higher glass transition temperatures than additional polymers. Monomers which may be incorporated into polyesters, polyamides and polycarbonates to impart water solubility include those having the structures:

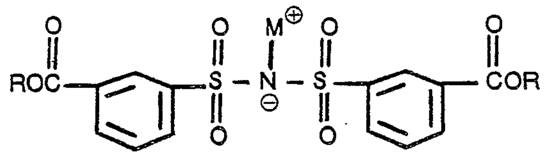
;

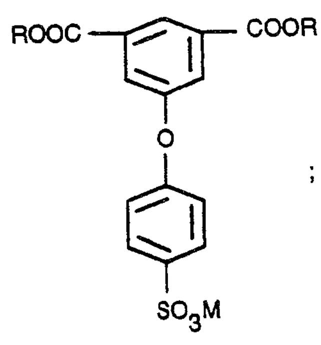
;

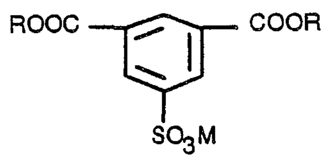

; and

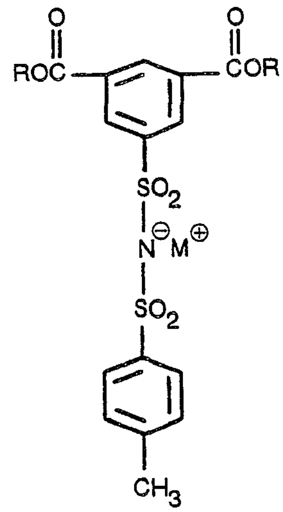

wherein:

M is ammonium or a monovalent metal and

each R is hydrogen, alkyl, aryl or halogen.

Monomers which may be incorporated into useful condensation polymers to produce high $T_g$ include aromatic diols and aromatic dicarboxylic acids or their functional equivalents, e.g., halide, esters or anhydrides, such as phthalic acid, isophthalic acid and terephthalic acid. Particularly effective monomers are those described in U.S. Patent 4,190,446, column 5, line 19, to column 8, line 43.

Examplary condensation polymers useful in the invention include:

poly(4,4′-isopropylidenediphenylene 3,3′-sodioiminodisulfonyldibenzoate);

poly[4,4′-(hexahydro-4,7-methanoindan-5-ylidene)-diphenylene 5-sodiosulfo-1,3-phenylenedicarboxylate];

poly(1,8-dimethylxanthylium-3,6-diyl chloride tetephthalate);

poly[1,1′-spirobiindan-5,5′-ylene 5-(N-potassio-*p*-tolylsulfonamidosulfonyl)-1,3-benzenedicarboxylate];

poly[4,4′-isopropylidenediphenylene 3,3′-sodioiminodisulfonyldibenzoate-co-terephthalate (75:25)];

poly[4,4′-isopropylidenebis(3,5-dichlorophenylene) 5-(4-sodiosulfophenoxy)-1,3-dibenzoate];

poly[4,4′-isopropylidenebis(3,5-dimethylphenylene-co-4,4′-(hexahydro-4,7-methanoindan-5-ylidene)-diphenylene (50:50) 3,3′-sodioiminodisulfonyldibenzoate-co-5-sodiosulfo-1,3-phenylenedicarboxylate (50:50)].

The described thermal- and methanical-barrier layers comprising the water-soluble polymers are capable of being coated using a wide variety of techniques. Useful methods include spray coating, air-knife coating, whirl coating, doctor-blade coating and slide-hopper coating. After coating, the barrier is dried, usually at elevated temperatures. The dried and, if necessary crosslinked layers should have a glass transition temperature greater than 100°C. In order to achieve this glass transition temperature with certain water-soluble polymers, it is necessary to remove a substantial amount of the water in the drying step. Usually, the dried layer will have less than 4 weight percent water.

The thermal- and mechanical-barrier layer of the optical recording elements of the present invention are coated on the heat-deformable optical recording layer (or layers) comprising a dye and an organic solvent-soluble binder. Deformations have been referred to in the art as pits, craters, depressions and cavities.

Preferred recording layers have an absorption factor greater than 20. Particularly preferred are layers wherein the dye and the binder are soluble in an organic solvent. Such layers are capable of being coated easily and economically. "Absorption factor" is defined as the extinction coefficient of the dye in the dye- and binder-containing layer divided by the molecular weight of the dye and multiplied by the weight percent of the dye in the coated layer. When layers of this type are recorded on which a beam of high energy-density radiation, a deformation pattern is formed which is capable of being read by a beam of high energy-density radiation which is not significantly absorbed by the recording layer. One would have expected that placing a thermal- and mechanical-barrier layer over such a recording layer would interfere with the formation of the proper type of deformation pattern. It has been unexpectedly found, however, that the thermal-and mechanical-barrier layer of a water-soluble, high $T_g$ polymer does not interfere with the formation of this type of deformation pattern. Optical recording elements having recording layers with a high absorption factor are described in European Patent Application, Publication No. 3262.

Depending upon the desired mode of reading the optical recording element of the present invention, the support for the element is either reflective or transparent. In the case of a reflective support, both sides of the support are optionally reflective and a recording layer, along with its associated thermal- and

mechanical-barrier layer or layers is coated on each side of the support. The support itself may be any of a wide variety of materials including glass, a self-supporting plastic such as poly(ethyleneterephthalate), cellulose acetate, poly(methylmethacrylate), poly(vinyl chloride) and polystyrene, or a metal such as aluminum. It is desirable that the support have a relatively high melting point in order to avoid deformation of the support during recording. The support is desirably very smooth to minimize noise and dropouts in the recording-playback process. Preferably the support is coated with a smoothing layer prior to the coating of the reflective surface and the other layers of the optical recording element described herein.

The composition which is used for the smoothing layer is preferably a low-viscosity, polymerizable fluid which is coated on the surface of the support. Following coating, polymerization of the fluid produces a micro-smooth surface on the support. The support is then made reflective by vacuum metalization of the smooth surface such as by evaporating aluminum onto the smoothed surface of the support. In preferred embodiments, the polymerizable fluid comprises photopolymerizable monomers or mixtures of monomers which are solvent free. Useful polymerizable fluids are described in U.S. Patent 4,092,173 and 4,171,979.

The thermal- and mechanical-barrier layer is optionally overcoated with a spacer layer. The function of the spacer layer is to place any defects which are on the surface of the element beyond the plane of focus of the recording and playback beam. While the water-soluble, high-$T_g$ polymers of the present thermal- and mechanical-barrier layer are capable of being coated in thick layers so as to provide this function in a single overcoat layer, it is desirable to overcoat the barrier layer with a water-impermeable polymer layer so that the element is resistant to the effects of humidity in the environment. Further, a spacer layer is capable of being optimized for other desirable surface properties. Particularly useful spacer layers include water-impermeable polymers such as cyclized polyisoprene, poly(butylene), neoprenes, 'RTV' (trade mark) silicones, linear aliphatic polyurethanes and photohardenable monomer or polymer compositions. The spacer layer may be coated in a single operation to provide a combined thickness of the barrier and spacer layers of at least about 0.1 mm or a thick spacer layer may be built up by successive thin coatings.

The spacer layer or barrier layer may be optionally overcoated with a topcoat layer to provide an outermost surface having desirable properties. For example, an antistatic layer may be optionally coated over the spacer layer or the barrier layer. Illustrative useful antistatic layers include layers containing soluble salts such as chloride, nitrate and similar water-soluble salts; insoluble organic salts such as those described in U.S. Patents 3,245,833 and 3,428,451; and polymers having ionic groups such as those described in U.S. Patent 4,070,189; to illustrate but a few. The outermost topcoat layer optionally may contain other addenda such as waxes to provide abrasion resistance and agents to reduce the buildup of static electricity.

The thermal- and mechanical-barrier layer, the spacer layer and/or the topcoat layer may also contain other addenda such as antioxodants, UV absorbers, coating aids and hardeners.

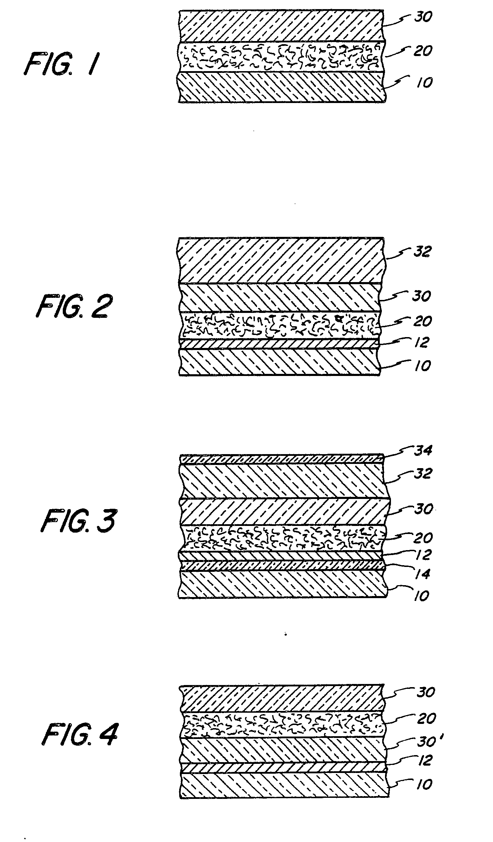

Figs. 1—4 are schematic illustrations of various embodiments of the invention.

Fig. 1 illustrates an optical recording element within the scope of the present invention. There is provided a support 10 having coated thereon an optical recording layer 20 and a thermal- and mechanical-barrier layer 30. In this embodiment, the support 10 is substantially transparent and, after the element has been recorded on, the element may be read by passing a reading beam through the thermal- and mechanical-barrier layer, the recording layer and the support to a sensor (not shown).

Fig. 2 illustrates another optical recording element of the invention. The recording element is similar to the element of Fig. 1 except that there has been provided a reflective layer 12, between the support and the recording layer, and a spacer layer 32 over the barrier layer. After this element has been recorded on, it is read by passing a reading beam through the spacer layer 32, the thermal- and mechanical-barrier layer 30 and the recording layer 20. The reading beam reflects off of the reflective layer 12 and is detected by a detector (not shown) which is positioned on the same side of the support as the described layers.

Fig. 3 illustrates yet another recording element of the invention. In addition to the previously described layers, there are provided a smoothing layer 14 between the support and the reflective layer 12, and an outermost topcoat layer 34 which contains, for example, an antistatic agent.

Fig. 4 illustrates still another recording element of the present invention wherein the thermal- and mechanical-barrier layers 30 and 30' are used to isolate the recording layer 20. In addition to the thermal- and mechanical-barrier layer 30 which is coated over the recording layer, a second thermal- and mechanical-barrier layer 30' is coated between the recording layer 20 and the reflective layer 12. This second thermal- and mechanical-barrier layer 30' minimizes heat loss from the recording layer 20 to the reflective layer 12 and protects the support 10 from damage by heat conducted to the reflective layer 12 during the recording process.

It will be readily appreciated that the figures are intended to represent only the general composition and orientation of the layers and are not drawn to scale.

The following examples are presented.

A basic recording element was prepared by the process wherein a 110-mm-diameter circular glass substrate was whirl-coated with a surface-smoothing composition by flooding the glass substrate with the smoothing composition at 80—100 rpm and then leveling the coating by advancing the speed to 500 rpm. The surface-smoothing composition comprised:

| | |
|---|---|
| pentaerythritol tetraacrylate | 20 g |
| a low-viscosity urethane-acrylate monomer (UV-curable 'Topcoat' [trade mark] 874—C—2002, Fuller O'Brien Corp.) | 20 g |
| 2-ethoxyethanol | 60 g |
| a coumarin sensitizer composition | 3g |
| surfactant | 3 drops |

The coated surface-smoothing composition was dried and cured by irradiating with a 3000-watt pulsed xenon arc lamp at 45.7 cm (18 in) for 4 min to provide a surface-smoothing layer.

A 0.05 micrometer thick reflecting layer of aluminum was vapor-deposited over the surface-smoothing layer.

A recording layer was formed over the reflecting layer by whirl-coating, that is, flooding the reflecting layer with a dye- and binder-containing composition at low rpm and then leveling the coating at about 1300 rpm. The dye- and binder-containing composition was formed by dissolving 1 g of cellulose nitrate and 1 g of the dye 2,5-bis(4-diethylaminobenzylidene)cyclopentanone. After drying, the basic recording element was ready for use or overcoating.

Example 1

A recording element protected with a thermal- and mechanical-barrier layer of this invention was prepared by whirl-coating a basic recording element prepared as described above with a 9.2% solution of poly(2-methyl-1-vinylimidazole) (Tg 182°C) in water onto the disc at 240 rpm. The thickness of the resulting layer was 0.15 micrometer after drying.

Example 2

A recording element protected with a thermal- and mechanical-barrier layer overcoated with a cyclized polyisoprene (Tg 127°C) spacer layer was prepared by whirl-coating a recording element prepared as described in Example 1 with an 8.4% solution of cyclized polyisoprene (CPI) in xylene at 240 rpm. The thickness of the spacer layer was about 2 μm after drying.

Example 3

A recording element protected with a thermal- and mechanical-barrier layer overcoated first with a cyclized polyisoprene spacer layer and then with a photohardened topcoat layer was prepared by whirl-coating a photohardenable composition onto an element prepared as described in Example 2 at 335 rpm to produce a layer about 0.13 mm thick. This layer was cured by exposing the coating to a 3000W pulsed xenon arc lamp at a distance of 30.5 cm (12 inches) for 80 seconds.

The photohardenable composition was as follows:

| | | Weight % |
|---|---|---|
| (a) | 'Cargin' X8—1030—47 (trade mark) Urethane Polymer (Cargill, Inc.) | 65.0 |
| (b) | 'Urethane' 788 (trade mark) Urethane Polymer (Thiokiol Chem. Corp.) | 12.9 |
| (c) | 'Chemlink' 100 (trade mark) Monomer (Ware Chemical Co.) | 8.6 |
| (d) | hexamethylene diacrylate | 9.5 |
| (e) | 4,4'-bis(chloromethyl)benzophenone | 3.8 |

The basic recording element and the recording elements of Examples 1—3 were evaluated by recording information in the recording layer using an argon-ion laser light beam (488 nm) focused with a numerical aperture NA = 0.525 while the element was rotating at 1800 rpm. Several power levels were used with each element. The recorded information was read back using a similarly focused helium-neon laser light beam (633 nm). The SNR of the readout for each sample is tabulated below.

| Sample | Recording Beam Power (mw) | | | | |
| --- | --- | --- | --- | --- | --- |
| | 400 | 600 | 800 | 1000 | 1250 |
| Basic Element | 44 | 50 | 51 | 53 | |
| Element of Example 1 | 34 | 39 | 46 | 49 | 50 |
| Element of Example 2 | 34 | 38 | 43 | 49 | 49 |
| Element of Example 3 | 36 | 45 | 47 | 48 | 49 |

Example 4

Example 1 was repeated except that the thermal- and mechanical-barrier layer was poly-(sodium 2-acrylamido-2-methylpropanesulfonate) (Tg >250°C). The power requirements and SNR on read-out of the resulting element were similar to Example 1.

Comparative Example

A basic recording element described above was overcoated with an 8-μm layer of cyclised polyisoprene. Up to a write power of 1250 mw, the SNR on readout was less than 20 db.

**Claims**

1. An optical recording element comprising a support having thereon a heat-deformable recording layer and at least one substantially transparent thermal- and mechanical-barrier layer coated over said recording layer characterized in that said recording layer comprises a dye and an organic solvent-soluble binder and said barrier layer comprises a polymer, excluding poly(acrylamide), having a glass transition temperature (Tg) of at least 100°C when dry, said polymer being water-soluble prior to coating.

2. An optical recording element according to claim 1, characterized in that said barrier layer is at least 0.15 μm thick.

3. An optical recording element according to claim 1 or 2, characterized in that the polymer of said barrier layer has a Tg when dry of at least 150°C.

4. An optical recording element according to any of claims 1 to 3, characterized in that the polymer of said barrier layer is poly(sodium 2-acrylamide-2-methylpropanesulphonate); poly(2-methyl-1-vinylimidazole); poly(1-vinylimidazole) or poly(styrenesulphonic acid, sodium salt).

5. An optical recording element according to claim 1, characterized in that the polymer of said barrier layer is crosslinked.

6. An optical recording element according to any of claims 1 to 5 further characterized in that said element has a transparent spacer layer coated over said barrier layer and that the combined thickness of said barrier layer and said spacer layer is greater than 0.1 mm.

7. An optical recording element according to claim 6, characterized in that said spacer layer is water-impermeable.

8. An optical recording element according to claim 7, characterized in that said spacer layer comprises cyclized polyisoprene.

9. An optical recording element according to any of claims 1 to 8 further characterized in that said element has an antistatic topcoat layer.

10. A method of recording information encoded on a high energy-density radiation beam which method comprises focussing the beam on the recording layer of an optical recording element according to any of the preceding claims and scanning the beam in relative motion to the recording layer to produce deformations in the layer which corresponds to the encoded information.

**Patentansprüche**

1. Optisches Aufzeichnungselement mit einem Träger, auf dem eine durch Einwirkung von Wärme deformierbare Aufzeichnungsschicht und mindestens eine im wesentlichen transparente thermische und mechanische Trennschicht, die auf die Aufzeichnungsschicht aufgeschichtet ist, aufgetragen sind, dadurch gekennzeichnet, daß die Aufzeichnungsschicht einen Farbstoff und ein in einem organischen Lösungsmittel lösliches Bindemittel und die Trennschicht ein Polymer, mit der Ausnahme von Poly(acrylamid), mit einer Glasübergangstemperatur (Tg) von mindestens 100°C in trockenem Zustand, das vor der Beschichtung in Wasser löslich ist, enthält.

2. Optisches Aufzeichnungselement nach Anspruch 1, dadurch gekennzeichnet, daß die Trennschicht mindestens 0,15 μm dick ist.

3. Optisches Aufzeichnungselement nach Anspruch 1 oder 2, dadurch gekennzeichnet, daß das Polymer der Trennschicht trocken einen Tg-Wert von mindestens 150°C aufweist.

4. Optisches Aufzeichnungselement nach einem der Ansprüche 1 bis 3, dadurch gekennzeichnet, daß das Polymer der Trennschicht aus Poly(natrium-2-acrylamid-2-methylpropansulfonat); Poly(2-methyl-1-vinylimidazol); Poly(1-vinylimidazol) oder Poly(Styrolsulfonsäure, Natriumsalz) besteht.

5. Optisches Aufzeichnungselement nach Anspruch 1, dadurch gekennzeichnet, daß das Polymer der Trennschicht quervernetzt ist.

6. Optisches Aufzeichnungselement nach einem der Ansprüche 1 bis 5, dadurch gekennzeichnet, daß es ferner eine transparente Abstandsschicht über der Trennschicht aufweist und daß die Dicke von Trennschicht und Abstandsschicht zusammen größer als 0,1 mm ist.

7. Optisches Aufzeichnungselement nach Anspruch 6, dadurch gekennzeichnet, daß die Abstandsschicht wasserimpermeabel ist.

8. Optisches Aufzeichnungselement nach Anspruch 7, dadurch gekennzeichnet, daß es eine Abstandsschicht aus cyclisiertem Polyisopropen aufweist.

9. Optisches Aufzeichnungselement nach einem der Ansprüche 1 bis 8, dadurch gekennzeichnet, daß das Element eine antistatische Deckschicht aufweist.

10. Verfahren zum Aufzeichnen von Informationen, die in einem Strahl hoher Energiedichte einkodiert sind, bei dem der Strahl auf die Aufzeichnungsschicht eines optischen Aufzeichnungselementes nach einem der vorstehenden Ansprüche fokussiert und der Strahl in relativer Bewegung zur Aufzeichnungsschicht abgetastet wird, unter Erzeugung von Informationen in der Schicht, die den einkodierten Informationen entsprechen.

**Revendications**

1. Produit d'enregistrement optique comprenant un support portant une couche d'enregistrement déformable par la chaleur et au moins une couche barrière résistante à des effets thermiques et mécaniques, pratiquement transparente, enduite sur la couche d'enregistrement, caractérisé en ce que la couche d'enregistrement comprend un colorant et un liant soluble dans un solvant organique et la couche barrière comprend un polymère, à l'exception d'un polyacrylamide, qui, à l'état sec, a une température de transition vitreuse d'au moins 100°C, ce polymère étant soluble dans l'eau avant le couchage.

2. Produit d'enregistrement optique, conforme à la revendication 1, caractérisé en ce que la couche barrière a une épaisseur d'au moins 0,15 μm.

3. Produit d'enregistrement optique, conforme à l'une des revendications 1 ou 2, caractérisé en ce que le polymère de la couche barrière a, à l'état sec, une température de transition vitreuse Tv d'au moins 150°C.

4. Produit d'enregistrement optique conforme à l'une quelconque des revendications 1 à 3, caractérisé en ce que le polymère de la couche barrière est formée de polymère de 2-acrylamido-2-méthyl-propanesulfonate de sodium, de polymère de 2-méthyl-1-vinylimidazole, de polymère de 1-vinylimidazole ou de polymère de styrènesulfonate de sodium.

5. Produit d'enregistrement optique, conforme à la revendication 1, caractérisé en ce que le polymère de la couche barrière est réticulé.

6. Produit d'enregistrement optique, conforme à l'une quelconque des revendications 1 à 5, caractérisé en outre en ce qu'il comprend une couche transparente d'espacement, appliquée sur la couche barrière, et en ce que l'épaisseur totale de la couche barrière et de la couche d'espacement est supérieur à 0,1 mm.

7. Produit d'enregistrement optique, conforme à la revendication 6, caractérisé en ce que la couche d'espacement est imperméable à l'eau.

8. Produit d'enregistrement optique, conforme à la revendication 7, caractérisé en ce que la couche d'espacement comprend du polyisoprène cyclisé.

9. Produit d'enregistrement optique, conforme à l'une quelconque des revendications 1 à 8, caractérisé en outre en ce qu'il comprend une surcouche antistatique.

10. Procédé d'enregistrement d'informations codées dans un pinceau de rayonnement de haute densité d'énergie consistant à faire converger le pinceau sur la couche d'enregistrement d'un produit d'enregistrement optique conforme à l'une quelconque des revendications précédentes et à déplacer le pinceau par rapport à la couche d'enregistrement pour enregistrer, dans la couche, des déformations qui correspondent aux informations codées.

FIG. 1

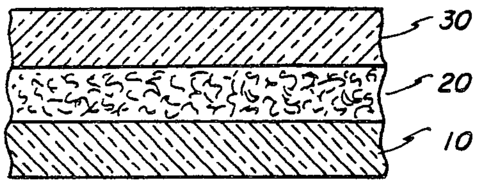


FIG. 2

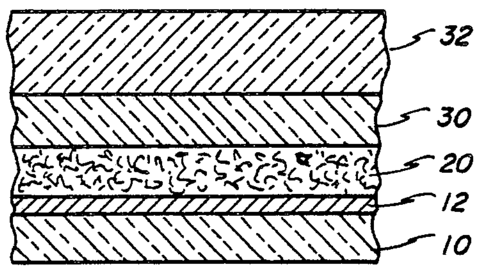


FIG. 3

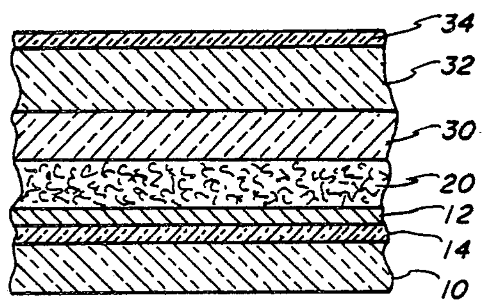


FIG. 4